# FASCICULE DE BREVET EUROPEEN

(11) **EP 0 895 692 B1**
(45) Date de publication et mention de la délivrance du brevet: **09.01.2002**
(21) Numéro de dépôt: 97921879.9
(22) Date de dépôt: 24.04.1997
(51) Int. Cl.: H04N 1/32

(54) **TELECOPIEUR AVEC ACCUSE DE RECEPTION**
FAKSIMILEGERÄT MIT EMPFANGSBESTÄTIGUNG
FAX MACHINE WITH ACKNOWLEDGEMENT

(30) Priorité: 25.04.1996 FR 9605467
(43) Date de publication de la demande: 10.02.1999
(73) Titulaire: Girod, Raoul, 69530 Brignais (FR)
(72) Inventeur: Girod, Raoul, 69530 Brignais (FR)
(74) Mandataire: Bratel, Gérard
(86) Numéro de dépôt international: FR9700736
(87) Numéro de publication internationale: WO9740618

(56) Documents cités:
- FR-A- 2 678 124
- PATENT ABSTRACTS OF JAPAN vol. 018, no. 364 (E-1575), 8 Juillet 1994 & JP 06 098133 A (OKI ELECTRIC IND CO LTD), 8 Avril 1994, cité dans la demande
- PATENT ABSTRACTS OF JAPAN vol. 009, no. 240 (E-345), 26 Septembre 1985 & JP 60 090448 A (NORIKO IKEGAMI), 21 Mai 1985,

## Description

La présente invention concerne le domaine des appareils pour la transmission à distance de documents, couramment désignés comme télécopieurs ou "fax", et elle se rapporte, plus particulièrement, à un télécopieur pourvu d'un système fiable d'accusé de réception, permettant de prouver une réception correcte, par un appareil "destinataire", d'un document émis par un appareil "expéditeur". En particulier, la preuve de la bonne réception du document est donnée, dans le cadre de l'invention, en faisant émettre automatiquement par l'appareil destinataire un "double" du document, qui est reçu en retour par l'appareil expéditeur.

Actuellement, le signal reçu en retour par l'expéditeur, et déclenchant éventuellement l'impression d'un bordereau de réception du document, ne prouve pas que la réception a été correcte, non seulement au sens de la bonne transmission du document par un réseau de télécommunications, mais encore au sens de l'impression effective et complète du document par l'appareil destinataire. En particulier, en cas d'absence d'encre, de glissement du papier ou de mauvais avancement du papier dans l'appareil destinataire, ou encore d'inversion de sens du papier dans le cas de papier ayant une seule face sensible, un signal d'accusé de réception peut être émis alors que le document à transmettre n'a pas du tout été imprimé, ou l'a été incorrectement et n'est pas conforme au document original, voire illisible.

Pour améliorer la fiabilité des transmissions par télécopie, une idée de solution consiste à renvoyer, vers l'appareil expéditeur, un "double" du document parvenu à l'appareil destinataire, qui pourra être comparé avec l'original.

Si ce "double" résulte seulement d'informations entrées dans une mémoire électronique de l'appareil destinataire, sans relecture du support physique du document reçu, il n'est nullement prouvé que le document a été effectivement et correctement imprimé par l'appareil destinataire, et l'on se trouve ramené au problème précédent (signal de réception indiquant seulement l'arrivée du document, mais non son impression correcte).

Pour que le "double" renvoyé vers l'appareil expéditeur soit significatif d'une réception et d'une impression correctes, il convient que ce "double" résulte d'une relecture optique de l'impression effectivement réalisée par l'appareil destinataire, et d'une transmission intégrale du résultat de cette relecture vers l'appareil expéditeur. Ce principe est déjà connu par le document JP-A-06098133.

Toutefois, ce document montre, pour la mise en oeuvre d'un tel principe d'accusé de réception, une configuration d'appareil qui n'est guère satisfaisante. Le télécopieur possède un premier circuit de papier sur lequel s'impriment les documents reçus, et un second circuit de papier pour les documents originaux à émettre, les deux circuits étant confondus dans leurs parties aval. Une tête d'impression est placée sur le partie amont du premier circuit, et une tête de lecture unique est placée sur la partie aval commune aux deux circuits, à distance de la tête d'impression, ladite tête de lecture servant aussi bien à la lecture des documents originaux à transmettre qu'à la relecture des documents reçus et imprimés. Cette configuration comporte, en particulier, les inconvénients suivants :
- Elle interdit toute possibilité d'impression sur un document original, et toute "interactivité" sur le document original.
- Elle exclut aussi la possibilité d'utilisation d'une tête mixte, c'est-à-dire une tête combinée permettant d'exécuter au même point l'impression et la lecture, d'une manière séparée ou simultanée.
- La configuration connue ne peut réaliser l'impression d'un accusé de réception en même temps que l'émission d'un document, ce qui ralentit le fonctionnement de l'appareil et nécessite une grande capacité de stockage intermédiaire.
- Dans la mesure où les parties aval des deux circuits de papier sont confondues, l'appareil comporte un seul bac de réception, dans lequel se mélangent tous les documents (originaux transmis, documents reçus et accusés de réception).
- Enfin, le chargement du papier est difficile.

La présente invention vise à remédier au moins partiellement à ces inconvénients, en fournissant un télécopieur avec accusé de réception de configuration améliorée particulièrement adaptée pour une relecture des documents reçus et imprimés, en vue de leur renvoi vers l'appareil expéditeur, notamment en permettant l'impression et la lecture au même point, ou sur une même partie de circuit de papier, d'une manière séparée ou simultanée, et permettre d'utiliser une tête mixte d'impression et de lecture.

A cet effet, selon un premier aspect de l'invention, celle-ci a pour objet un télécopieur pourvu d'un système d'accusé de réception, par relecture optique d'un document effectivement reçu et imprimé par l'appareil destinataire du document, et par retransmission du résultat de la relecture vers l'appareil expéditeur du document original, le télécopieur comprenant un premier circuit de papier pour les documents reçus et les accusés de réception à imprimer, et un second circuit de papier, entièrement distinct du premier circuit de papier, pour les documents originaux à émettre, le premier circuit de papier comportant une tête d'impression et une tête de lecture optique permettant de relire optiquement un document reçu réellement imprimé par la tête d'impression, en vue de sa retransmission vers l'appareil expéditeur, tandis que le second circuit de papier comporte une seconde tête de lecture optique pour la lecture des documents originaux à transmettre.

Dans cette configuration, l'appareil se caractérise donc par la combinaison d'une tête d'impression et de deux têtes de lecture, dont l'une est associée à la tête d'impression et dédiée à la seule fonction de relecture pour l'envoi d'accusés de réception restituant le document original. Les deux têtes de lecture peuvent être ici du même type, ou de types différents.

Sur le premier circuit de papier, la tête de lecture peut être séparée de la tête d'impression et située en aval de cette tête d'impression, par référence au sens d'avance du papier. Cette disposition s'applique notamment dans le cas d'utilisation de papier vierge stocké en rouleau et se déroulant en bande continue, un organe de coupe du papier étant alors avantageusement disposé sur le premier circuit de papier, entre la tête d'impression et la tête de lecture.

Cependant, notamment dans le cas d'utilisation de papier vierge en feuilles séparées, la tête de lecture et la tête d'impression du premier circuit de papier peuvent aussi être rapprochées et/ou réunies sous la forme d'une tête mixte d'impression et de lecture.

Selon un deuxième aspect de l'invention, celle-ci a pour objet un télécopieur pourvu d'un système d'accusé de réception, par relecture optique d'un document effectivement reçu et imprimé par l'appareil destinataire du document, et par retransmission du résultat de la relecture vers l'appareil expéditeur du document original, le télécopieur comprenant un premier circuit de papier pour les documents reçus et les accusés de réception à imprimer, et un second circuit de papier pour les documents originaux à émettre, qui sont distincts l'un de l'autre dans leurs parties amont, mais confondus dans leurs parties aval, la partie aval commune des deux circuits de papier comportant une tête d'impression et une tête de lecture optique, cette tête de lecture unique étant prévue pour la lecture des documents originaux à émettre et pour la relecture d'un document reçu réellement imprimé par la tête d'impression, en vue de sa retransmission vers l'appareil expéditeur.

Sur la partie aval ici commune des deux circuits de papier, la tête de lecture unique peut être séparée de la tête d'impression et située en aval de cette tête d'impression. En variante, toujours sur la partie aval commune des deux circuits de papier ici considérés, la tête de lecture unique et la tête d'impression peuvent être rapprochées et/ou réunies sous la forme d'une tête mixte d'impression et de lecture, ce qui conduit à une réalisation particulièrement simple et compacte d'un télécopieur avec système d'accusé de réception.

Selon un troisième aspect de l'invention, qui combine les deux aspects précédents, celle-ci a pour objet un télécopieur pourvu d'un système d'accusé de réception, par relecture optique d'un document effectivement reçu et imprimé par l'appareil destinataire du document, et par retransmission du résultat de la relecture vers l'appareil expéditeur du document original, le télécopieur comprenant un premier circuit de papier pour les documents reçus et les accusés de réception à imprimer, et un second circuit de papier pour les originaux à émettre, qui sont distincts l'un de l'autre dans leurs parties amont, mais confondus dans leurs parties aval, la partie aval commune des deux circuits de papier comportant une tête d'impression et une tête de lecture optique, prévue pour la relecture d'un document reçu réellement imprimé par la tête d'impression, en vue de sa retransmission vers l'appareil expéditeur, tandis qu'une autre tête de lecture est placée sur la partie amont du second circuit de papier, pour la lecture des documents originaux à émettre.

De toute façon, l'invention sera mieux comprise à l'aide de la description qui suit, en référence du dessin schématique annexé représentant, à titre d'exemples, quelques formes de réalisation de ce télécopieur avec accusé de réception :
Figure 1 est une vue de côté, en coupe, d'une première forme de réalisation de télécopieur conforme à la présente invention ;
Figure 2 est une vue de côté, en coupe, d'une variante du télécopieur de figure 1 ;
Figure 3 est une vue de côté, en coupe, d'une autre variante de ce télécopieur ;
Figure 4 est une vue de côté, en coupe, d'une deuxième forme de réalisation de télécopieur conforme à la présente invention ;
Figure 5 est une vue de côté, en coupe, d'une variante du télécopieur de figure 4 ;
Figure 6 est une vue de côté, en coupe, d'une autre variante de ce télécopieur ;
Figure 7 est une vue de côté, en coupe, d'une troisième forme de réalisation de télécopieur conforme à la présente invention ;
Figure 8 est une vue de côté, en coupe, d'une variante du télécopieur de figure 7 ;
Figure 9 est une vue de côté, en coupe, d'une autre variante de ce télécopieur ;
Figure 10 est une vue de côté, en coupe, d'une quatrième forme de réalisation du télécopieur selon l'invention ;
Figure 11 et 12 sont des schémas explicatifs, illustrant la liaison entre deux télécopieurs conformes à l'invention ;
Figure 13 est un schéma similaire aux précédents, illustrant la liaison entre un télécopieur ordinaire et un télécopieur selon l'invention.

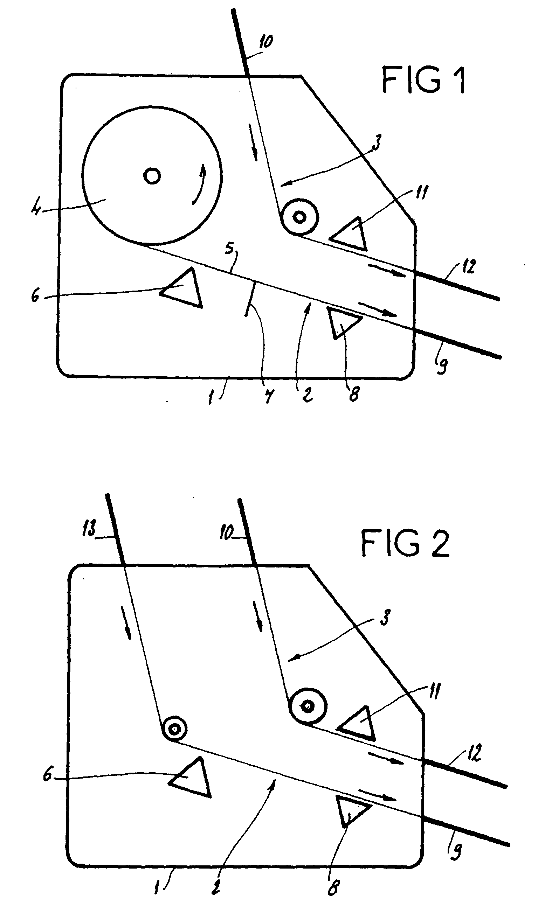

La figure 1 montre un télécopieur, dont le boîtier 1 renferme un premier circuit de papier 2 pour les documents reçus et les accusés de réception à imprimer, et un second circuit de papier 3, entièrement distinct du premier, pour les documents originaux à émettre. Les deux circuits de papier 2 et 3 sont ici sensiblement parallèles.

Le premier circuit 2 utilise ici du papier vierge stocké en rouleau 4 à l'intérieur du boîtier 1. La bande de papier continue 5, se déroulant du rouleau 4, passe successivement devant une tête d'impression 6, un organe de coupe du papier 7 et une tête de lecture optique 8, avant de parvenir à une sortie 9 située à l'avant de l'appareil et réalisable sous la forme d'un bac de réception (non représenté en détail), dans lequel tombent tous les documents imprimés par le télécopieur.

Le second circuit de papier 3 comporte, d'amont en aval : une entrée 10 pour l'alimentation du télécopieur en documents originaux à émettre, une autre tête de lecture optique 11, et une sortie 12 située à l'avant de l'appareil, pour la récupération des documents originaux expédiés vers un appareil destinataire (non représenté), situé à distance.

Dans le cas de la réception d'un document, en provenance d'un appareil expéditeur (non représenté), le rouleau de papier vierge 4 se déroule, et la bande de papier déroulée 5 est imprimée par la tête d'impression 6, ce qui reconstitue le document reçu. La bande de papier continue 5 imprimée est ensuite découpée en feuilles successives par l'organe de coupe 7, et le document imprimé sur ces feuilles est relu par la tête de lecture 8. Ce document relu peut être alors émis en retour, de façon immédiate ou différée, vers l'appareil expéditeur, qui recevra alors un document constituant l'image exacte de celui qu'il avait expédié.

La figure 2 représente une variante de l'appareil de figure 1, dans laquelle le rouleau de papier vierge est remplacé par une alimentation 13 en feuilles séparées de papier vierge, située à la partie supérieure du boîtier 1. Le premier circuit de papier 2 est ainsi dépourvu d'organe de coupe, et comporte d'amont en aval la tête d'impression 6 et la tête de lecture 8, séparées l'une de l'autre par une certaine distance. Le second circuit de papier 3 n'est pas modifié, et le fonctionnement d'ensemble de l'appareil correspond globalement à la description précédente.

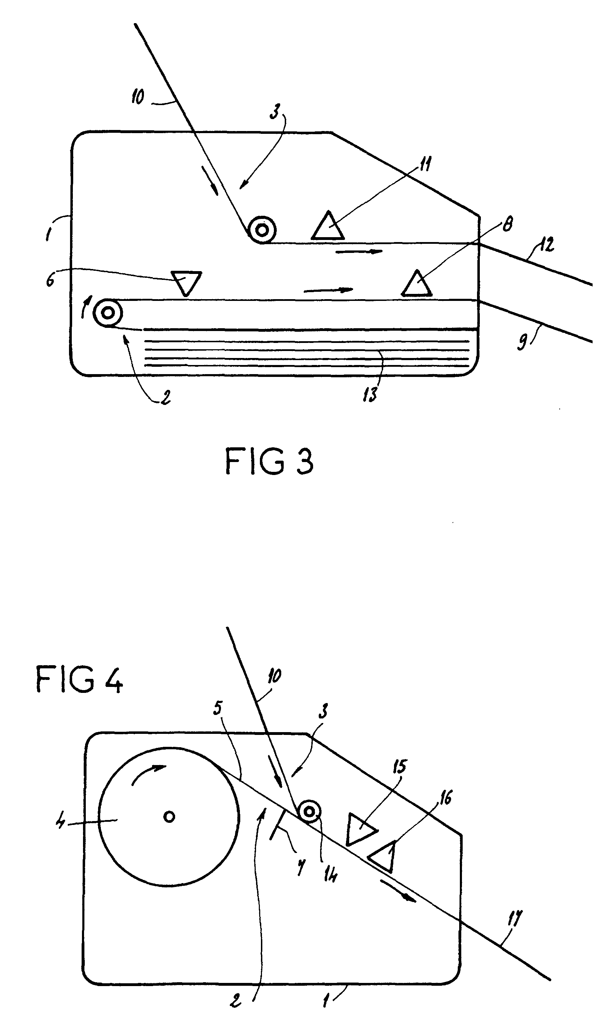

La figure 3 représente une autre variante, dans laquelle l'alimentation 13 en feuilles séparées de papier vierge est réalisée par un bac, situé dans la partie inférieure du boîtier 1.

La figure 4 montre un autre télécopieur, dont le boîtier 1 renferme un premier circuit de papier 2 pour les documents reçus et les accusés de réception à imprimer, et un second circuit de papier 3 pour les documents originaux à émettre, qui sont distincts dans leurs parties amont, mais confondus dans leurs parties aval.

Le premier circuit 2 utilise ici du papier vierge stocké en rouleau 4 à l'intérieur du boîtier 1 ; la bande de papier continue 5, se déroulant du rouleau 4, passe devant un organe de coupe du papier 7 avant de parvenir au point de réunion 14 des deux circuits de papier 2 et 3.

Comme précédemment, le second circuit 3 comporte, à l'amont, une entrée 10 pour l'alimentation en documents originaux à émettre.

Dans la partie aval commune des deux circuits de papier 2 et 3, sont disposées successivement une tête d'impression unique 15 et une tête de lecture optique unique 16, qui peuvent être séparées l'une de l'autre, ou rapprochées, ou encore réunies en une seule tête mixte d'impression et de lecture. Les deux circuits de papier 2 et 3 possèdent une sortie commune 17, située à l'avant de l'appareil, qui délivre les documents reçus imprimés et les accusés de réception, et qui restitue les documents originaux lus et expédiés.

Dans cette configuration, l'unique tête de lecture 16 effectue la lecture des documents originaux à émettre, ainsi que la relecture des documents reçus et reproduits par la tête d'impression 15. Les documents relus sont émis en retour vers l'appareil expéditeur.

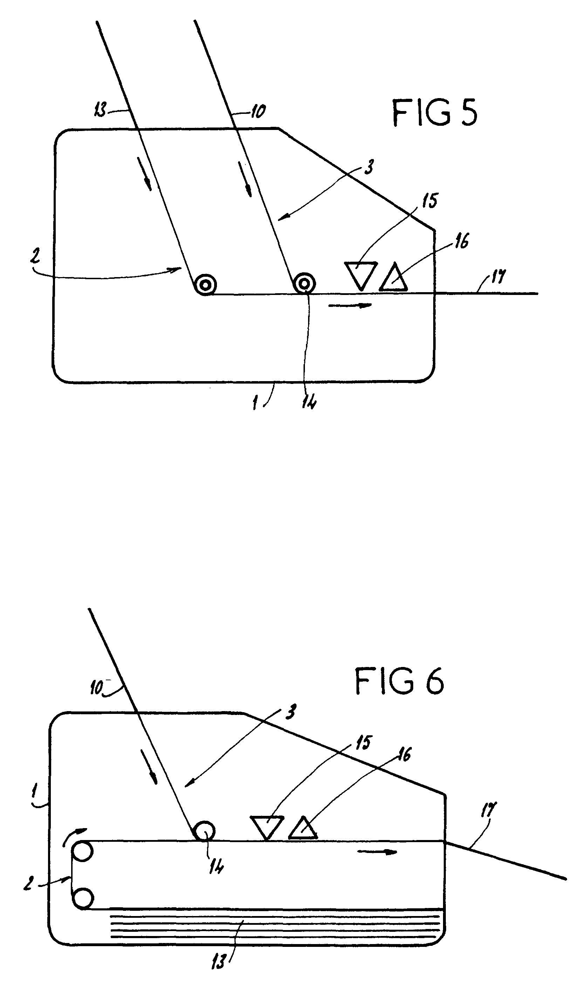

La figure 5 représente une variante de l'appareil de figure 4, dans laquelle le rouleau de papier vierge est remplacé par une alimentation 13 en feuilles séparées de papier vierge, l'organe de coupe étant ici supprimé. Comme précédemment, la partie commune des deux circuits de papier 2 et 3 comporte une tête d'impression unique 15 suivie d'une tête de lecture unique 16, pouvant être séparées, rapprochées ou réunies en une seule tête mixte.

La figure 6 montre une variante du cas précédent, avec une alimentation 13 en feuilles séparées de papier vierge sous forme de bac, situé dans la partie inférieure du boîtier 1.

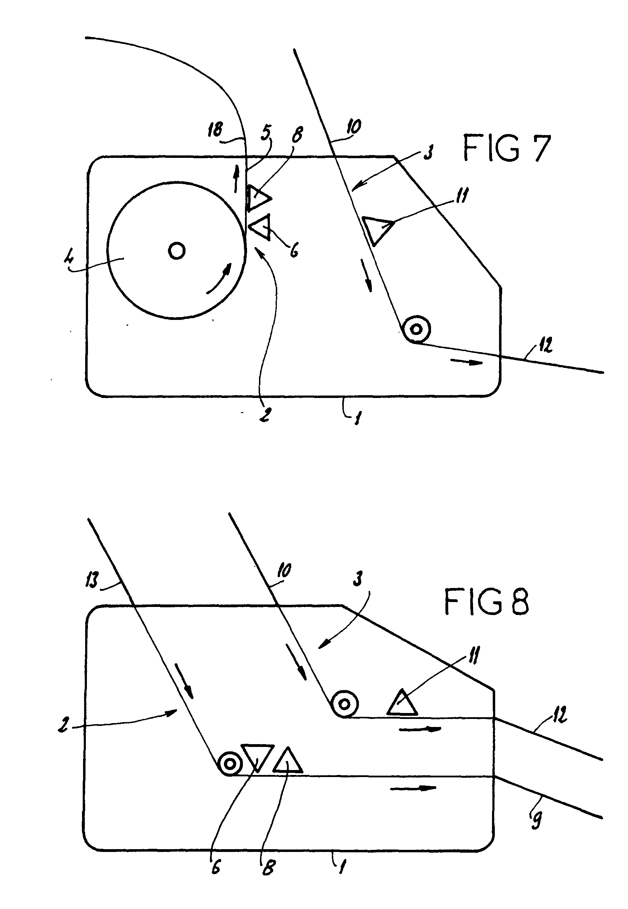

La figure 7 montre encore un autre télécopieur, dans lequel le premier circuit de papier 2, pour les documents reçus et les accusés de réception à imprimer, est distinct du second circuit de papier 3 pour les documents originaux à émettre, les deux circuits de papier 2 et 3 étant situés dans des parties distinctes du boîtier 1 de l'appareil.

Le premier circuit 2 utilise ici du papier vierge stocké en rouleau 4, et la bande de papier continue 5, qui se déroule du rouleau 4, passe devant une tête d'impression 6 puis devant une tête de lecture 8, fortement rapprochées ou réunies en une tête mixte d'impression et de lecture. Les documents reçus imprimés et les accusés de réception sont délivrés à une sortie 18 située dans la partie supérieure de l'appareil, et non plus à l'avant de celui-ci.

Le circuit 3 pour les documents originaux à émettre correspond sensiblement à celui de la figure 1, et comporte notamment une tête de lecture 11 qui lui est propre.

La configuration de la figure 7 a l'avantage de se rapprocher de certaines constructions actuelles, donc de représenter une solution économique et simple à mettre en oeuvre.

La figure 8 représente une variante de l'appareil de figure 7, qui s'apparente au télécopieur de la figure 2 notamment par son alimentation supérieure 13 en feuilles séparées de papier vierge, pour le premier circuit de papier 2 qui reste distinct du second circuit de papier 3. La tête d'impression 6 et la tête de lecture 8 prévues sur le premier circuit de papier 2 sont, ici aussi, fortement rapprochées ou réunies en une tête mixte d'impression et de lecture.

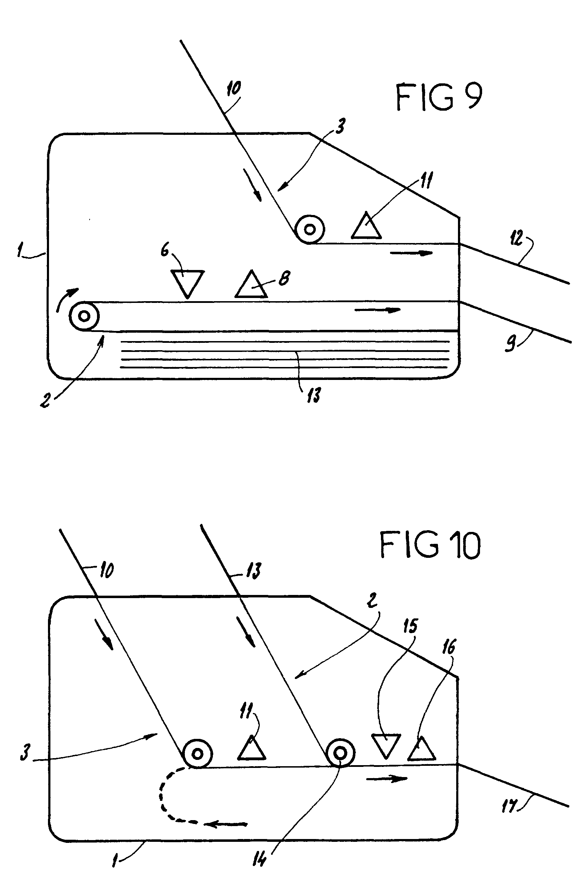

La figure 9 montre une variante du cas précédent, avec une alimentation 13 en feuilles séparées de papier vierge sous forme de bac, situé dans la partie inférieure du boîtier 1.

La figure 10 montre une autre forme de réalisation qui, bien que comportant deux circuits de papier 2 et 3, confondus dans leurs parties aval, possède une première tête de lecture 11 placée dans la partie amont du circuit de papier 3 pour les documents originaux, et une deuxième tête de lecture 16, associée à la tête d'impression 15, placée sur la partie aval commune aux deux circuits de papier 2 et 3. La deuxième tête de lecture 16 sert ici uniquement à la lecture de contrôle des documents reçus et imprimés, en vue de l'émission de l'accusé de réception. On notera aussi que la figure 10 illustre une disposition inversée par rapport aux précédentes, en ce sens que le premier circuit de papier 2 se situe ici au-dessus du second circuit de papier 3, et non plus au-dessous de ce dernier. Selon une variante, esquissée en pointillés sur la figure 10, l'alimentation du circuit de papier à imprimer 2 peut être remplacée ou complétée par une alimentation par un bac à feuilles, situé en partie inférieure du boîtier 1.

Egalement dans le cas de la figure 10, sur la partie aval commune des deux circuits de papier 2 et 3, la tête de lecture 16 et la tête d'impression 15 peuvent être rapprochées et/ou réunies sous la forme d'une tête mixte d'impression et de lecture.

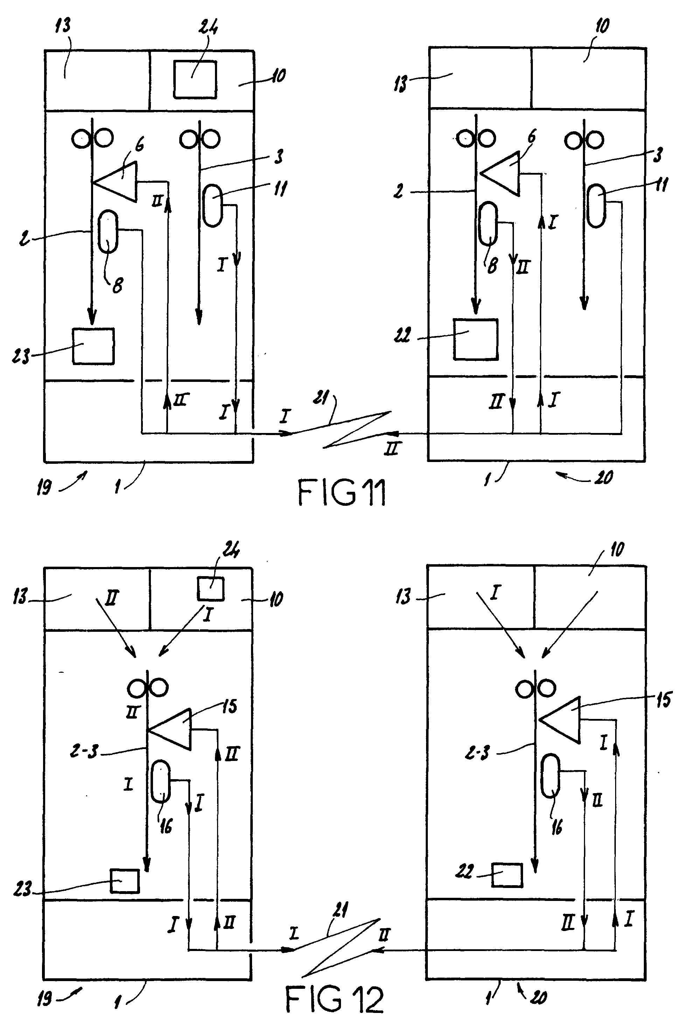

La figure 11 illustre, de façon très schématique, la liaison établie entre un télécopieur expéditeur 19 et un télécopieur destinataire 20, par une ligne de communication à distance 21, dans le cas pris ici pour exemple de deux télécopieurs selon l'invention à circuits de papier 2 et 3 distincts, les repères conservant leurs significations précédentes notamment en ce qui concerne les têtes d'impression 6 et les têtes de lecture 8 et 11. D'une manière analogue, la figure 12 illustre très schématiquement la liaison établie entre un télécopieur expéditeur 19 et un télécopieur destinataire 20, par une ligne de communication à distance 21, dans le cas deux télécopieurs selon l'invention à circuits de papier 2 et 3 partiellement confondus (selon figures 4 à 6), avec tête d'impression unique 15 et tête de lecture unique 16.

Sur les figures 11 et 12, l'opération symbolisée par les flèches I correspond à l'émission-réception initiale d'un document, entre l'appareil expéditeur 19 et l'appareil destinataire 20. L'opération symbolisée par les flèches II correspond à la relecture du document 22 reçu et imprimé par l'appareil destinataire 20, et à son retour vers l'appareil expéditeur 19, à titre d'accusé de réception et de contrôle. Dans le cas de la figure 11, les opérations I et II peuvent être réalisées successivement, par ligne d'impression. Dans le cas de la figure 12, les opérations I et II sont successives, soit par feuilles, soit par document. Le boîtier 1 de chaque appareil 19 ou 20 contient une mémoire-tampon nécessaire pour assurer le stockage des signaux, en cas de transmissions décalées.

L'émission en retour par l'appareil destinataire 20 sera effectuée sur la même ligne de communication 21 que la transmission du document original par l'appareil expéditeur 19, en alternant émission principale et retour, soit par ligne d'impression, soit par fraction de page, soit par page complète, soit par groupe de pages. La capacité de la mémoire-tampon précitée sera proportionnée au volume d'informations à transmettre selon l'un ou l'autre de ces divers modes. L'utilisation de multiplexeurs permet d'éviter des stockages trop importants.

Du côté de l'appareil expéditeur 19, qui est aussi le destinataire du document transmis en retour à titre d'accusé de réception, il est possible :
- soit de réimprimer le document reçu en retour sous forme d'accusé de réception sur papier 23, pour le comparer visuellement avec le document original transmis 24 ;
- soit de comparer électroniquement le document reçu en retour avec le document original transmis.

Chaque appareil 19 ou 20 comporte avantageusement une commande, lui indiquant de fonctionner en mode habituel (sans accusé de réception) ou en mode avec accusé de réception ; un signal transmis à l'appareil destinataire aura, sur ce dernier, le même effet, en supposant qu'il s'agisse d'un télécopieur avec possibilité d'accusé de réception selon l'invention. Ce signal sera ignoré s'il est reçu par un appareil traditionnel ; dans ce cas, l'appareil expéditeur imprimera, affichera ou signalera, par tout moyen, un message d'échec indiquant l'impossibilité d'obtenir un accusé de réception.

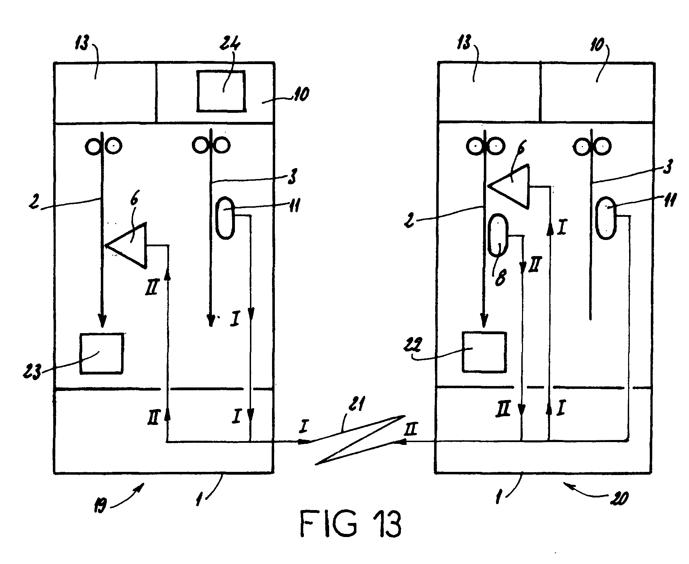

Par contre, comme l'illustre la figure 13, il est parfaitement possible à un télécopieur 19 ordinaire (dépourvu lui-même du système d'accusé de réception), utilisé comme appareil expéditeur, de recevoir un accusé de réception renvoyé par un télécopieur destinataire 20 conforme à la présente invention.

Dans le cas de documents émis par fractions de page, il est permis d'exécuter des impressions en retour par fractions de page, éventuellement sur le document original lui-même.

Pour la construction du sous-ensemble constitué d'une tête de lecture 8 ou 16 associée à une tête d'impression 6 ou 15, deux modes de réalisation sont notamment possibles :
- Selon une première possibilité, la tête de lecture est constituée par une barrette de lecture optique occupant toute la largeur du papier, et disposée en aval et parallèlement à la tête d'impression ou à la direction du mouvement d'impression.
- Selon une deuxième possibilité, une tête de lecture optique verticale est fixée sur une tête d'impression mobile, et permet de lire pas à pas l'impression réalisée, sur une hauteur égale à celle de l'impression ou sur une hauteur double ou par deux composants de lecture.

Le système d'accusé de réception, objet de l'invention, est particulièrement destiné à la vérification et à la preuve de la bonne transmission et réception d'un document, notamment avec impression d'un accusé de réception sous la forme d'un double du document original transmis, ce qui permet de donner à la transmission par télécopie un caractère de preuve voisin de celui des courriers recommandés avec ou sans avis de réception, et permet une transmission à distance de documents administratifs, juridiques ou comptables dans de bonnes conditions de sécurité, avec vérification immédiate et constitution, chez l'expéditeur, d'une preuve pouvant être conservée et avoir une valeur légale. Dans le cas d'une transmission cryptée, le télécopieur objet de l'invention a aussi pour avantage particulier de permettre un contrôle effectif des opérations de cryptage et de décryptage. On notera aussi que le système d'accusé de réception proposé est, dans son principe indépendant de tout serveur informatique et de tout réseau d'ordinateurs, et évite ainsi tout risque d'accès indésirables ; toutefois, une utilisation de ce système d'accusé de réception en association avec un serveur intermédiaire reste envisageable, ainsi qu'en connexion locale ou distante avec un ordinateur ou tout appareil possédant un écran et un clavier. Dans tous les cas, le contrôle de la bonne réception et impression d'un document émis pourra se faire au choix par impression, visualisation, ou comparaison électronique avec le document émis, des éléments renvoyés par l'appareil destinataire. Bien entendu, le terme "document" désigne ici aussi bien un texte qu'une image ou une combinaison de texte et d'image.

## Revendications

1. Télécopieur pourvu d'un système d'accusé de réception, par relecture optique d'un document effectivement reçu et imprimé par l'appareil destinataire du document, et par retransmission du résultat de la relecture vers l'appareil expéditeur du document original, le télécopieur comprenant un premier circuit de papier (2) pour les documents reçus et les accusés de réception à imprimer, et un second circuit de papier (3), pour les documents originaux à émettre, **caractérisé en ce que** le premier circuit de papier (2) comporte une tête d'impression (6) et une tête de lecture optique (8) permettant de relire optiquement un document reçu réellement imprimé par la tête d'impression (6), en vue de sa retransmission vers l'appareil expéditeur (19), tandis que le second circuit de papier (3), entièrement distinct du premier circuit de papier (2), comporte une seconde tête de lecture optique (11) pour la lecture des documents originaux à transmettre (figures 1, 2, 3, 7, 8, 9).

2. Télécopieur avec système d'accusé de réception selon la revendication 1, **caractérisé en ce qu'**il comporte, sur le premier circuit de papier (2), une tête de lecture (8) séparée de la tête d'impression (6) et située en aval de cette tête d'impression (6), par référence au sens d'avance du papier (5) (figures 1, 2, 3).

3. Télécopieur avec système d'accusé de réception selon la revendication 2, **caractérisé en ce que**, dans le cas d'utilisation de papier vierge stocké en rouleau (4) et se déroulant en bande continue (5), un organe de coupe du papier (7) est disposé sur le premier circuit de papier (2), entre la tête d'impression (6) et la tête de lecture (8) (figure 1).

4. Télécopieur avec système d'accusé de réception selon la revendication 1, **caractérisé en ce que**, notamment dans le cas d'utilisation de papier vierge en feuilles séparées, la tête de lecture (8) et la tête d'impression (6) du premier circuit de papier (2) sont rapprochées et/ou réunies sous la forme d'une tête mixte d'impression et de lecture (figures 7, 8, 9).

5. Télécopieur pourvu d'un système d'accusé de réception, par relecture optique d'un document effectivement reçu et imprimé par l'appareil destinataire du document, et par retransmission du résultat de la relecture vers l'appareil expéditeur du document original, le télécopieur comprenant un premier circuit de papier (2) pour les documents reçus et les accusés de réception à imprimer, et un second circuit de papier (3) pour les documents originaux à émettre, qui sont distincts l'un de l'autre dans leurs parties amont, mais confondus dans leurs parties aval, **caractérisé en ce que** la partie aval commune des deux circuits de papier (2,3) comporte une tête d'impression (15) et une tête de lecture optique (16), cette tête de lecture unique (16) étant prévue pour la lecture des documents originaux à émettre et pour la relecture d'un document reçu réellement imprimé par la tête d'impression (15), en vue de sa retransmission vers l'appareil expéditeur (19) (figures 4, 5, 6).

6. Télécopieur pourvu d'un système d'accusé de réception selon la revendication 5, **caractérisé en ce que**, sur la partie aval commune des deux circuits de papier (2,3), la tête de lecture unique (16) est séparée de la tête d'impression (15) et située en aval de cette tête d'impression (15).

7. Télécopieur pourvu d'un système d'accusé de réception selon la revendication 5, **caractérisé en ce que**, sur la partie aval commune des deux circuits de papier (2,3), la tête de lecture unique (16) et la tête d'impression (15) sont rapprochées et/ou réunies sous la forme d'une tête mixte d'impression et de lecture (figures 4, 5, 6).

8. Télécopieur pourvu d'un système d'accusé de réception, par relecture optique d'un document effectivement reçu et imprimé par l'appareil destinataire du document, et par retransmission du résultat de la relecture vers l'appareil expéditeur du document original, le télécopieur comprenant un premier circuit de papier (2) pour les documents reçus et les accusés de réception à imprimer, et un second circuit de papier (3) pour les documents originaux à émettre, qui sont distincts l'un de l'autre dans leurs parties amont, mais confondus dans leurs parties aval, **caractérisé en ce que** la partie aval commune des deux circuits de papier (2,3) comporte une tête d'impression (15) et une tête de lecture optique (16), prévue pour la relecture d'un document reçu réellement imprimé par la tête d'impression (15), en vue de sa retransmission vers l'appareil expéditeur (19), tandis qu'une autre tête de lecture (11) est placée sur la partie amont du second circuit de papier (3), pour la lecture des documents originaux à émettre (figure 10).

9. Télécopieur pourvu d'un système d'accusé de réception selon la revendication 8, **caractérisé en ce que**, sur la partie aval commune des deux circuits (2,3), la tête de lecture (16) et la tête d'impression (15) sont rapprochées et/ou réunies sous la forme d'une tête mixte d'impression et de lecture (figure 10).

## Patentansprüche

1. Faksimilegerät mit einem System zur Empfangsbestätigung durch optisches Wiederlesen eines tatsächlich empfangenen und vom Empfangsgerät des Adressaten ausgedruckten Schriftstücks und durch Rückübertragung des Ergebnisses des Wiederlesens an das Absendegerät des Originalschriftstücks, wobei das Faksimilegerät einen ersten Papierkreislauf (2) für die empfangenen Schriftstücke und die zu druckenden Empfangsbestätigungen und einen zweiten Papierkreislauf (3) für die zu sendenden Originalschriftstücke umfasst, **dadurch gekennzeichnet, dass** der erste Papierkreislauf (2) einen Druckkopf (6) und einen optischen Lesekopf (8) hat, die es ermöglichen, ein empfangenes, tatsächlich vom Druckkopf (6) ausgedrucktes Schriftstück optisch wiederzulesen im Hinblick auf seine Rückübertragung zu dem Absendegerät (19), während der zweite Papierkreislauf (3), völlig getrennt vom ersten Papierkreislauf (2), einen zweiten optischen Lesekopf (11) für das Lesen der zu übermittelnden Originalschriftstücke umfasst (Figuren 1, 2, 3, 7, 8, 9).

2. Faksimilegerät mit einem System zur Empfangsbestätigung nach Anspruch 1, **dadurch gekennzeichnet, dass** es am ersten Papierkreislauf (2) einen Lesekopf (8) umfasst, der vom Druckkopf (6) getrennt ist und sich bezogen auf die Vorschubrichtung des Papiers (5) hinter diesem Druckkopf (6) befindet (Figuren 1, 2, 3).

3. Faksimilegerät mit einem System zur Empfangsbestätigung nach Anspruch 2, **dadurch gekennzeichnet, dass** im Fall der Verwendung von unbedrucktem Papier, das als Rolle (4) gelagert ist und sich kontinuierlich abwickelt (5), eine Papierschneidevorrichtung (7) am ersten Papierkreislauf (2) zwischen dem Druckkopf (6) und dem Lesekopf (8) angeordnet ist (Figur 1).

4. Faksimilegerät mit einem System zur Empfangsbestätigung nach Anspruch 1, **dadurch gekennzeichnet, dass** insbesondere bei Verwendung von unbedrucktem Papier in getrennten Blättern der Lesekopf (8) und der Druckkopf (6) des ersten Papierkreislaufs (2) einander angenähert und/oder in Form eines einzigen Kopfes zum Drucken und zum Lesen vereinigt sind (Figuren 7, 8, 9).

5. Faksimilegerät mit einem System zur Empfangsbestätigung durch optisches Wiederlesen eines Schriftstücks, das tatsächlich empfangen und von dem Gerät des Adressaten des Schriftstücks ausgedruckt wurde, und durch Rückübertragung des Ergebnisses des Wiederlesens an das Absendegerät des Originalschriftstücks, wobei das Faksimilegerät einen ersten Papierkreislauf (2) für die empfangenen Schriftstücke und die zu druckenden Empfangsbestätigungen und einen zweiten Papierkreislauf (3) für die abzusendenden Originalschriftstücke umfasst, die in ihren flussaufwärts angeordneten Teilen voneinander getrennt sind, aber in ihren flussabwärts liegenden Teilen vereinigt sind, **dadurch gekennzeichnet, dass** der gemeinsame flussabwärts liegende Teil der zwei Papierkreisläufe (2, 3) einen Druckkopf (15) und einen optischen Lesekopf (16) umfasst, wobei dieser einzige Lesekopf (16) für das Lesen der abzusendenden Originalschriftstücke und für das Wiederlesen eines empfangenen, tatsächlich von dem Druckkopf (15) gedruckten Schriftstücks im Hinblick auf dessen Rückübertragung zu dem Absendegerät (19) vorgesehen ist (Figuren 4, 5, 6).

6. Faksimilegerät mit einem System zur Empfangsbestätigung nach Anspruch 5, **dadurch gekennzeichnet, dass** bei dem gemeinsamen flussabwärts liegenden Teil der zwei Papierkreisläufe (2, 3) der einzige Lesekopf (16) von dem Druckkopf (15) getrennt ist und sich flussabwärts von diesem Druckkopf (15) befindet.

7. Faksimilegerät mit einem System zur Empfangsbestätigung nach Anspruch 5, **dadurch gekennzeichnet, dass** bei dem gemeinsamen flussabwärts liegenden Teil der zwei Papierkreisläufe (2, 3) der einzige Lesekopf (16) und der Druckkopf (15) einander angenähert und/oder in Form eines einzigen Druck- und Lesekopfes miteinander verbunden sind (Figuren 4, 5, 6).

8. Faksimilegerät mit einem System zur Empfangsbestätigung durch optisches Wiederlesen eines tatsächlich empfangenen und vom Empfangsgerät des Schriftstücks ausgedruckten Schriftstücks und durch Rückübertragung des Ergebnisses des Wiederlesens an das Absendegerät des Originalschriftstücks, wobei das Faksimilegerät einen ersten Papierkreislauf (2) für die empfangenen Schriftsücke und die zu druckenden Empfangsbestätigungen und einen zweiten Papierkreislauf (3) für die zu sendenden Originalschriftstücke umfasst, die in ihren flussaufwärts liegenden Teilen voneinander getrennt, aber in ihren flussabwärts liegenden Teilen vereinigt sind, **dadurch gekennzeichnet, dass** der gemeinsame flussabwärts liegende Teil der zwei Papierkreisläufe (2, 3) einen Druckkopf (15) und einen optischen Lesekopf (16) umfasst, der für das Wiederlesen eines empfangenen Schriftstücks, das tatsächlich von dem Druckkopf (15) gedruckt wurde, im Hinblick auf seine Rückübertragung zu dem Sendegerät (19) vorgesehen ist, während ein anderer Lesekopf (11) in dem flussaufwärts liegenden Teil des zweiten Papierkreislaufs (3) zum Lesen der zu sendenden Originalschriftstücke angeordnet ist (Figur 10).

9. Faksimilegerät mit einem System zur Empfangsbestätigung nach Anspruch 8, **dadurch gekennzeichnet, dass** bei dem gemeinsamen flussabwärts liegenden Teil der zwei Kreisläufe (2, 3) der Lesekopf (16) und der Druckkopf (15) einander angenähert sind und/oder in Form eines einzigen Druck- und Lesekopfes vereinigt sind (Figur 10).

## Claims

1. A fax machine provided with an acknowledgement system by optical read-back of a document actually received and printed by the device which receives the document, and by the re-transmission of the result of the read-back to the device which sends the original document, said fax comprising a first paper circuit (2) for documents received and for acknowledgements to be printed, and a second paper circuit (3) for original documents to be sent, **characterised in that** the first paper circuit (2) comprises a print head (6) and an optical read head (8) which enable a document received and actually printed by the print head (6) to be optically read-back for the purpose of re-transmitting it to the sending device (19), whilst the second paper circuit (3), which is completely separate from the first paper circuit (2), comprises a second optical read head (11) for reading original documents to be transmitted (Figures 1, 2, 3, 7, 8, 9).

2. A fax machine with an acknowledgement system according to claim 1, **characterised in that** in the first paper circuit (2) it comprises a read head (8) which is separate from the print head (6) and which is situated downstream of said print head (6) with respect to the direction of feed of the paper (5) (Figures 1, 2, 3).

3. A fax machine with an acknowledgement system according to claim 2, **characterised in that** when blank paper is used which is stored on a roll (4) and which is unrolled to form a continuous strip (5), a paper cutting element (7) is disposed in the first paper circuit (2) between the print head (6) and the read head (8) (Figure 1).

4. A fax machine with an acknowledgement system according to claim 1, **characterised in that**, particularly when blank paper is used in the form of separate sheets, the read head (8) and the print head (6) of the first paper circuit (2) are brought together and/or are combined in the form of a combined print and read head (Figures 7, 8, 9).

5. A fax machine provided with an acknowledgement system by optical read-back of a document actually received and printed by the device which receives the document, and by re-transmission of the result of said read-back to the device which sends the original document, said fax comprising a first paper circuit (2) for documents received and for acknowledgements to be printed, and a second paper circuit (3) for original documents to be sent, which circuits are separate from each other in their upstream parts but are merged with each other in their downstream parts, **characterised in that** the common downstream part of the two paper circuits (2, 3) comprises a print head (15) and an optical read head (16), said single read head (16) being provided for reading original documents to be sent and for the read-back of a document received which has actually been printed by the print head (15), with the object of re-transmitting it to the sending device (19) (Figures 4, 5, 6).

6. A fax machine provided with an acknowledgement system according to claim 5, **characterised in that** in the common downstream part of the two paper circuits (2, 3) the single read head (16) is separate from the print head (15) and is situated downstream of said print head (15).

7. A fax machine provided with an acknowledgement system according to claim 5, **characterised in that** in the common downstream part of the two paper circuits (2, 3) the single read head (16) and the print head (15) are brought together and/or combined in the form of a combined print and read head (Figures 4, 5, 6).

8. A fax machine provided with an acknowledgement system, by optical read-back of a document actually received and printed by the device which receives the document, and by re-transmitting the result of the read-back to the device which sends the original document, said fax comprising a first paper circuit (2) for documents received and for acknowledgements to be printed, and a second paper circuit (3) for original documents to be sent, which circuits are separate from each other in their upstream parts but are merged in their downstream parts. **characterised in that** the common downstream part of the two paper circuits (2, 3) comprises a print head (15) and an optical read head (16) which is provided for the read-back of a document received and actually printed by the print head (15) with the object of the re-transmitting it to the sending device (19), whilst another read head (11) is situated in the upstream part of the second paper circuit (3) for reading original documents to be sent (Figure 10).

9. A fax machine provided with an acknowledgement system according to claim 8, **characterised in that** in the common downstream part of the two circuits (2, 3) the read head (16) and the print head (15) are brought together and/or combined in the form of a combined print and read head (Figure 10).
